(19) Europäisches Patentamt
European Patent Office
Office européen des brevets

(11) **EP 4 376 109 A2**

(12) **EUROPEAN PATENT APPLICATION**

(43) Date of publication:
**29.05.2024 Bulletin 2024/22**

(21) Application number: **23212444.6**

(22) Date of filing: **27.11.2023**

(51) International Patent Classification (IPC):
*H01M 4/02* $^{(2006.01)}$  *H01M 4/04* $^{(2006.01)}$
*H01M 4/133* $^{(2010.01)}$ *H01M 4/134* $^{(2010.01)}$
*H01M 4/1393* $^{(2010.01)}$ *H01M 4/1395* $^{(2010.01)}$
*H01M 4/36* $^{(2006.01)}$ *H01M 4/38* $^{(2006.01)}$
*H01M 10/0525* $^{(2010.01)}$ *H01M 50/109* $^{(2021.01)}$

(52) Cooperative Patent Classification (CPC):
**H01M 4/366; H01M 4/0404; H01M 4/133;
H01M 4/134; H01M 4/1393; H01M 4/1395;
H01M 4/364; H01M 4/386; H01M 10/0525;
H01M 50/109;** H01M 2004/021; H01M 2300/004

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.11.2022 KR 20220161487**

(71) Applicant: **Hansol Chemical Co., Ltd
Seoul 06169 (KR)**

(72) Inventors:
• **LEE, JEONGHUN
55321 Wanju-gun (KR)**

• **SHIM, HYEONWOO
55321 Wanju-gun (KR)**
• **CHOI, WOOYEONG
55321 Wanju-gun (KR)**
• **LEE, JONGHA
55321 Wanju-gun (KR)**
• **KWON, SEMAN
55321 Wanju-gun (KR)**

(74) Representative: **Script IP Limited
Suite J, Anchor House
School Close
Chandlers Ford
Eastleigh, Hampshire SO53 4DY (GB)**

(54) **ANODE ACTIVE MATERIAL, METHOD OF PREPARING THE SAME, AND LITHIUM SECONDARY BATTERY INCLUDING THE SAME**

(57) Provided are an anode active material including a core including metal particles, and a shell layer formed on an outer portion of the core, in which the shell layer includes metal carbide particles and a carbon-based material, and a number density (number/$\mu$m$^2$) of the metal carbide particles in the shell layer is 50 or more to 100 or less, a method of preparing the same, and a lithium secondary battery including the same.

FIG. 1

EP 4 376 109 A2

**Description**

CROSS-REFERENCE TO RELATED APPLICATION

This application claims the benefit of Korean Patent Application No. 10-2022-0161487 filed on November 28, 2022, in the Korean Intellectual Property Office, the entire disclosure of which is incorporated herein by reference for all purposes.

BACKGROUND

1. Field of the Invention

One or more embodiments relate to an anode active material, a method of preparing the same, and a lithium secondary battery including the same, and more particularly, to an anode active material capable of showing a stable behavior during a long-term charge/discharge and improving the battery life by introducing silicon carbide (SiC) particles to a shell layer at a specific density, a method of preparing the same, and a lithium secondary battery including the same.

2. Description of the Related Art

As lithium ion batteries (LIBs) have a high energy density and are easy to design, the LIBs are being used as a main power source for mobile electronic devices and their application range will expand further in the future to the fields of electric vehicles, power storage devices of renewable energy, and the like.

In order to apply the LIBs to new applications, research on LIB materials having characteristics such as a higher energy density and longer life is continuously required. In particular, research has been conducted on various materials such as carbon, silicon, tin, germanium, and the like for anode materials.

Among them, silicon-based anode materials have received a lot of attention, because the silicon-based anode materials have a very high theoretical capacity compared to currently commercialized graphite anode materials. However, the silicon-based anode materials have problems such as a deterioration of electrochemical properties due to the formation of an unstable solid electrolyte interphase (SEI) layer due to a side reaction of a silicon surface and an electrolyte, or crushing of an electrode material occurring due to an internal stress caused by rapid volume expansion occurring during discharging and discharging.

To solve the above problems, research has been conducted on the nanostructuring of the silicon-based anode material, surface modification, heterogeneous material compounding. In particular, a method of performing surface coating or compounding with carbon materials is widely researched mainly in the industrial world. Various surface treatments using carbon materials require complicated and expensive processes, and although some of the life characteristics of the silicon-based anode material have been improved through the surface treatments using carbon materials, it is necessary to revise the fundamental material design concept in order to cope with large volume changes that occur during charging and discharging the silicon-based anode material.

Therefore, there is still a need to develop a technology for structural modification of a high-capacity silicon-based anode active material in order to improve the unstable life characteristics of the silicon-based anode active material while suppressing the volume expansion of the silicon-based anode active material.

SUMMARY

The present disclosure has been made in view of the aforementioned problems and an object thereof is to provide an anode active material for a secondary battery having long-life characteristics, the anode active material having a high capacity and high energy density and capable of showing a stable charge/discharge behavior even after long-term use.

In addition, another object of the present disclosure is to provide a method of preparing the anode active material, and a lithium secondary battery including the anode active material.

However, goals to be achieved are not limited to those described above, and other goals not mentioned above are clearly understood by one of ordinary skill in the art from the following description.

According to an aspect, there is provided an anode active material including a core including metal particles, and a shell layer formed on an outer portion of the core. The shell layer includes metal carbide particles and a carbon-based material, and a number density (number/$\mu m^2$) of the metal carbide particles in the shell layer is 50 or more to 100 or less.

According to another aspect, there is provided a method of preparing an anode active material, the method including step S 1 of dispersing metal nanoparticles in a solvent, step S2 of preparing a spherical metal precursor powder by spray-drying the dispersed solution, step S3 of mixing and compounding the spherical metal precursor powder with an amorphous carbon precursor and crystalline carbon, and step S4 of performing a heat treatment at 1100°C to 1400°C for 3 to 8 hours.

According to still another aspect, there is provided a lithium secondary battery including the anode active material.

Additional aspects of embodiments will be set forth in part in the description which follows and, in part, will be apparent from the description, or may be learned by practice of the disclosure.

An anode active material according to an embodiment of the present disclosure is composed of a core portion including silicon particles, and a shell portion surrounding the core portion and including silicon carbide particles and a carbon-based material. The silicon particles herein are a high-capacity anode active material. The silicon particles may improve an energy density of a composite material, and internal pores thereof may effectively accept volume expansion of the silicon particles during charging to prevent structural destruction of a composite.

In addition, the carbon-based material may improve the life characteristics of the anode active material through a stable electrochemical reaction with an electrolyte solvent on an outermost portion of the shell portion.

Also, the silicon carbide (SiC) particles may effectively prevent the destruction of the shell portion due to a stress generated during the expansion of the core portion by increasing a mechanical strength of the shell portion, thereby contributing to the expression of the stable life characteristics.

It should be understood that the effects of the present disclosure are not limited to the above-described effects, but are construed as including all effects that can be inferred from the configurations and features described in the following description or claims of the present disclosure.

BRIEF DESCRIPTION OF THE DRAWINGS

These and/or other aspects, features, and advantages of the invention will become apparent and more readily appreciated from the following description of embodiments, taken in conjunction with the accompanying drawings of which:

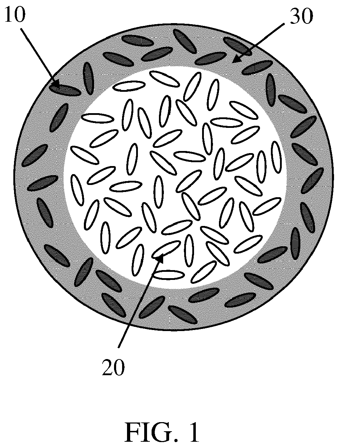

FIG. 1 is a schematic diagram illustrating an anode active material according to an embodiment;
FIG. 2 is a diagram illustrating an evaluation of life characteristics of Examples 1 to 3 and Comparative Examples 1 to 6 according to the present disclosure;
FIG. 3 is a diagram illustrating an evaluation of output characteristics of Examples 1 to 3 and Comparative Examples 1 to 6 according to the present disclosure;

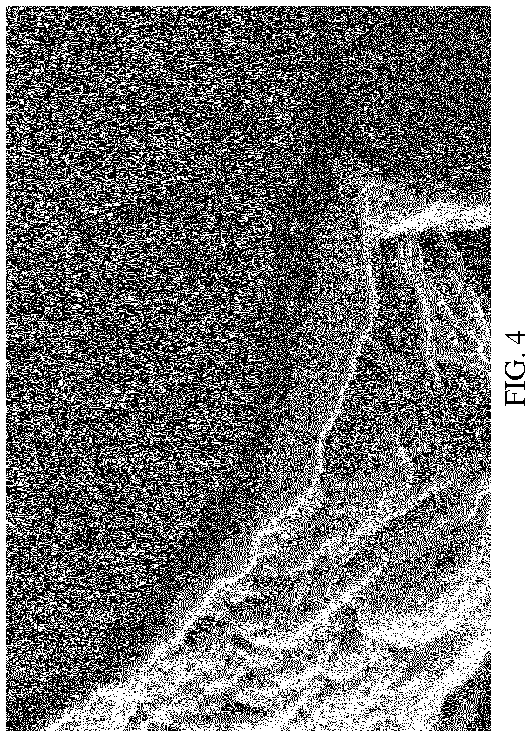

FIG. 4 is an enlarged view of a focused ion beam-scanning electron microscope (FIB-SEM) image of an anode active material according to Example 1 of the present disclosure; and

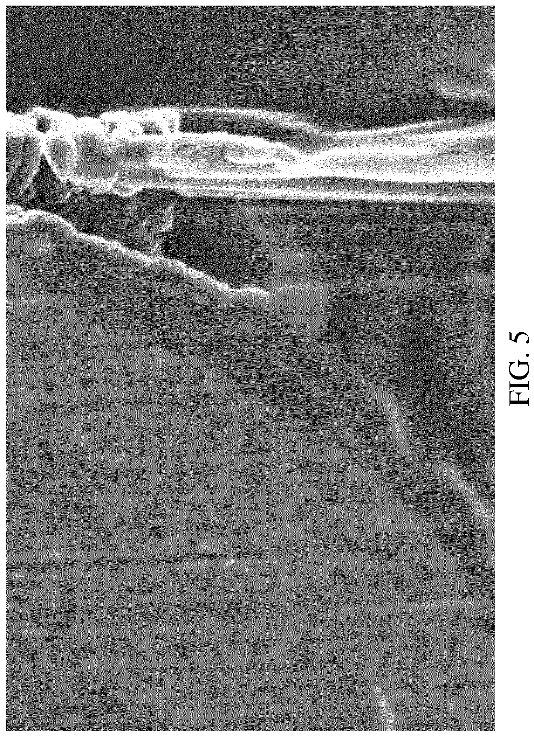

FIG. 5 is an enlarged view of an FIB-SEM image of an anode active material according to Comparative Example 5 of the present disclosure.

DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

According to an aspect of the present disclosure, there is provided an anode active material including a core including metal particles, and a shell layer formed on an outer portion of the core, in which the shell layer includes metal carbide particles and a carbon-based material, and a number density (number/$\mu m^2$) of the metal carbide particles in the shell layer is 50 or more and 100 or less.

The metal particles included in the core of the anode active material may include one or more selected from a group consisting of Si, Al, Zn, Ca, Mg, Fe, Mn, Co, Ni, and Ge, and may preferably include silicon (Si) particles to improve an energy density and capacity.

Meanwhile, the silicon particles may be more specifically in the form of silicon nanoparticles, silicon oxide nanoparticles, silicon carbide nanoparticles, and/or silicon alloy nanoparticles, and the silicon particles may have, for example, a shape of flakes. In addition, a desirable size of the silicon particle may correspond to a nano-size of 1000 nanometers (nm) or less, and the silicon nanoparticles included may make it easy to suppress a volume change of silicon according to the charging and discharging.

Furthermore, an average particle size of the silicon nanoparticles may be more desirably 50 nm to 200 nm and even more desirably 80 nm to 130 nm based on $D_{50}$.

When the average particle size $D_{50}$ of the silicon nanoparticles is less than 50 nm, the manufacturing cost may increase and battery capacity and efficiency may decrease. When the average particle size thereof exceeds 130 nm, it may be not desirable in terms of the effect of the suppression of the volume change and the battery life.

As described above, the anode active material according to an embodiment of the present disclosure may include the core formed of a large number of nano-sized silicon particles, and may exhibit the effects of more excellent life characteristics and output characteristics, compared to a core formed of silicon single particles. This may also be confirmed through comparison of Examples 1 to 3 and Comparative Examples 1 to 3 which will be described later in detail.

Meanwhile, the core may include the carbon-based material, in addition to the metal particles such as the silicon nanoparticles described above in detail, and the carbon-based material may specifically include one or more of crystalline carbon and amorphous carbon.

The type of crystalline carbon may include graphite-based carbon. More specifically, graphite carbon may include natural graphite, artificial graphite, expanded graphite, and the like.

The natural graphite is naturally produced graphite, and examples thereof may include flake graphite, high crystalline graphite, and the like. The artificial graphite is artificially synthesized graphite and is produced by heating amorphous carbon at a high temperature, and examples thereof may include primary graphite, electrographite, secondary graphite, graphite fibers, and the like.

In addition, the expanded graphite may be obtained by intercalating a chemical such as an acid or alkali between layers of graphite and heating it to inflate vertical layers of a molecular structure.

Meanwhile, the amorphous carbon is not particularly limited, may be formed of one or more selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin or a vinyl chloride resin, coal-based pitch, petroleum-based pitch, polyvinyl chloride, mesophase pitch, tar, a block copolymer, polyol, and low-molecular-weight heavy oil, and may be formed of, more specifically, coal-based pitch, petroleum-based pitch, and an acrylic resin.

Meanwhile, in the anode active material, the shell layer including the metal carbide particles and the carbon-based material is formed on the outer portion of the core described above in detail.

As the anode active material includes the shell layer described above, it is possible to effectively prevent the contact between the metal particles such as the silicon nanoparticles provided inside the core, and an electrolyte solvent, and enable a stable and reversible electrochemical reaction of the metal particles.

In addition, the metal carbide particles may effectively prevent the destruction of the shell layer due to a stress generated during the expansion of the core portion by increasing a mechanical strength of the shell layer, and improve the life characteristics of the anode active material through a stable electrochemical reaction with the electrolyte solvent in an outermost portion of the shell layer by using the carbon-based material included together with the metal carbide particles.

In addition, the carbon-based material may be substantially the same as/similar to the carbon-based material described above.

Meanwhile, the metal carbide particles included in the shell layer may be homogeneously distributed in the shell layer and included at a number density of 50 to 100 (unit: number/$\mu m^2$). The number density is derived by observing a cross section of a powder particle of the anode active material and determining the number of metal carbide particles present per unit area ($\mu m^2$) in the shell layer.

When the number density of the metal carbide particles in the shell layer exceeds the upper limit, the conductivity of lithium ions may decrease, resulting in a decrease in output characteristics and the efficiency of a battery. When the number density thereof is less than the lower limit, the destruction of the shell layer due to the volume change of the core may not be effectively prevented because the mechanical strength of the shell layer is not sufficient. Therefore, the number density of the metal carbide particles in the shell layer is appropriately 50 to 100, and differences in the life characteristics and output characteristics may be confirmed through the comparison of Examples 1 to 3 and Comparative Examples 4 and 5 which will be described below.

In addition, the metal carbide particles included in the shell layer may be desirably silicon carbide (SiC) particles, a size thereof is desirably 50 nm to 200 nm. When the size of the silicon carbide particles is less than the lower limit, the effect of improving the strength of the shell layer may not be exhibited, and when the size thereof exceeds the upper limit, a problem that inhibits the electrochemical reaction or the formation of the shell layer may occur.

A thickness of the shell layer may be 100 nm to 3 $\mu$m. When the thickness of the shell layer is less than 100 nm, the shell layer may be damaged due to the volume change of the silicon, which may adversely affect the life characteristics, and when the thickness thereof exceeds 3 $\mu$m, not only the capacity of a composite, but also the ionic conductivity is reduced as the amount of carbon increases, and this may degrade the output characteristics.

In addition, the anode active material may have a structure including the core and the shell layer described above, and a size thereof may be 3 $\mu$m to 10 $\mu$m and more desirably 5 $\mu$m to 8 $\mu$m in terms of an average particle size $D_{50}$.

When the average particle size $D_{50}$ of the core-shell structure composite is less than 3 $\mu$m, dispersibility may be degraded during an electrode manufacturing process due to a fine powder, and when the average particle size $D_{50}$ thereof exceeds 10 $\mu$m, problems regarding the life and safety may occur due to intensified electrode expansion due to volume expansion of the composite.

According to an aspect of the present disclosure, there is provided a method of preparing an anode active material, the method including: step S 1 of dispersing metal nanoparticles in a solvent; step S2 of preparing a spherical metal precursor powder by spray-drying the dispersed solution; step S3 of mixing and compounding the spherical metal precursor powder with an amorphous carbon precursor and crystalline carbon; and step S4 of performing a heat treatment at 1100°C to 1400°C for 3 to 8 hours.

In step S 1, metal nanoparticles prepared in advance may be used to be dispersed in the solvent, and step of preparing the metal nanoparticles through a pulverization process of metal particles may be additionally included before step S1.

When the pulverization process is additionally included, the metal particles may be pulverized to have nano-size of a specific size (e.g., 80 nm to 130 nm) through milling or the like, and the type of the metal particles used herein may be substantially the same as the type of the metal particles described above.

In an example, the metal particles may be one or more silicon-containing nanoparticles selected from a group consisting of silicon nanoparticles, silicon oxide nanoparticles, silicon carbide nanoparticles, and silicon alloy nanoparticles, and may be more desirably silicon nanoparticles.

In addition, the solvent may be a solvent including one or more selected from a group consisting of methanol, ethanol, propanol, and butanol, and may be desirably a solvent including isopropyl alcohol (IPA) among them.

The spherical metal precursor powder formed through step S2 may be compounded by mixing with the amorphous carbon precursor and the crystalline carbon precursor using a compounding machine manufactured by Hansol Chemical under the conditions of an atmosphere or inert atmosphere at a reaction temperature of 40°C to 250°C for 1 minute to 24 hours (step S3), and a structure of a core-shell structure composite may be prepared through step S3. The type of crystalline carbon and amorphous carbon mixed with the spherical metal precursor powder may be substantially the same as the crystalline carbon and the amorphous carbon described in detail above.

Also, in step S3, a mixing weight ratio of the spherical metal precursor powder to the amorphous carbon precursor may be adjusted within a range of 40:20 to 40:35 so that the metal carbide particles such as silicon carbide (SiC) may be prepared to have the number density of 50 or more and 100 or less in the shell layer of the anode active material. When the mixing weight ratio is less than the above range (less than 40:20, e.g., 40: 10), the number density of the metal carbide particles in the shell layer of the anode active material to be prepared may be less than 50, and when the mixing weight ratio exceeds the above range (exceeds 40:35, e.g., 40:40), the number density may exceed 100.

As described above, the above case may cause poor results of life characteristics and output characteristics.

The heat treatment of step S4 may be performed at 1100°C to 1400°C for 3 to 8 hours, and when the temperature is lower than the above temperature range or the heat treatment time is less than the above time range, the silicon carbide particles such as silicon carbide (SiC) may not be properly formed in the shell layer.

A composite powder formed through these processes may finally be used as the anode active material according to an embodiment of the present disclosure through a sieving process of 325 mesh or the like.

Meanwhile, the present disclosure may also provide a lithium secondary battery including the anode active material described in detail above.

According to an embodiment of the present disclosure, the lithium secondary battery may include an anode, a cathode, an electrolyte, and a separator as components, and the anode may further additionally include a commonly used anode active material as an anode active material of a lithium battery in the technical field, in addition to the anode active material described above. Materials of the commonly used anode active material may include, for example, one or more selected from a group consisting of a lithium metal, metal alloyable with lithium, transition metal oxide, non-transition metal oxide, and a carbon-based material.

The cathode may include a cathode active material, the type of the cathode active material may correspond to a lithium-containing metal oxide, and it is applicable to the lithium secondary battery of the present disclosure as long as it is commonly used in the related

technical field.

The electrolyte may include a non-aqueous electrolyte containing a lithium salt, and specifically, a non-aqueous electrolyte, a solid electrolyte, an inorganic solid electrolyte, or the like may be used.

Meanwhile, as the separator, a separator such as a glass fiber, polyester, Teflon, polyethylene (PE), polypropylene, or polylyl tetrafluoroethylene (PTFE) may be disposed between the cathode and the anode in the lithium secondary battery.

Hereinafter, the configuration of the present disclosure and effects thereof will be described in more detail through examples and comparative examples. However, the examples are merely intended for the purpose of describing the disclosure in more detail, and thus, the scope of the disclosure is not limited to the examples.

Examples

(1) Preparation of anode active material

a) Example 1

A solution, in which silicon nanoparticles ($D_{50}$ = 93 nm) and a small amount of nanocarbon particles are dispersed, was sprayed and dried to obtain a secondary particle precursor. The precursor was mixed with petroleum-based pitch and graphite at a weight ratio of 40:25:35, and the mixture was inserted into a compounding device (manufactured by Hansol Chemical) to proceed with compounding, and a composite powder was obtained. After performing the heat treatment on the composite powder in an inert atmosphere at 1100°C for 3 hours, and a powder obtained through a sieving process (325 mesh) was used as an anode active material.

b) Example 2

An anode active material was prepared in the same manner as in Example 1, except that the ratio of the silicon precursor, petroleum-based pitch, and graphite was set to a weight ratio of 40:22:38.

c) Example 3

An anode active material was prepared in the same manner as in Example 1, except that the ratio of the silicon precursor, petroleum-based pitch, and graphite was set to a weight ratio of 40:28:32.

d) Comparative Example 1

An anode active material was prepared in the same manner as in Example 1, except that the silicon precursor was applied as silicon microparticles ($D_{50}$ = 3 $\mu$m) during the compounding process.

e) Comparative Example 2

An anode active material was prepared in the same manner as in Example 2, except that the silicon precursor was applied as silicon microparticles ($D_{50}$ = 3 $\mu$m) during the compounding process.

f) Comparative Example 3

An anode active material was prepared in the same manner as in Example 3, except that the silicon precursor was applied as silicon microparticles ($D_{50}$ = 3 $\mu$m) during the compounding process.

g) Comparative Example 4

An anode active material was prepared in the same manner as in Example 1, except that the ratio of the silicon precursor, petroleum-based pitch, and graphite was set to a weight ratio of 40: 18:42.

h) Comparative Example 5

An anode active material was prepared in the same manner as in Example 1, except that the ratio of the silicon precursor, petroleum-based pitch, and graphite was set to a weight ratio of 40:38:22.

g) Comparative Example 6

An anode active material was prepared in the same manner as in Example 1, except that the heat treatment was performed under the heat treatment conditions of an inert atmosphere at 900°C for 3 hours.

(2) Method of evaluating physical properties (Table 1)

a) Measurement of particle size

The average particle size of the silicon particles and precursor was measured using an organic solution, in which the anode active material prepared as described above was dispersed, by a particle size measurement device (Mastersizer 3000, Malvern Panalytical).

b) Measurement of amount of carbon

The amount of carbon was measured through the quantitation of gas generated by the combustion of the prepared anode active material at a high temperature (2200°C or higher) (ELEMENTRAC CS-I, ELTRA).

c) Measurement of porosity

A porosity of the core portion was derived by Equation 1 below.

[Equation 1]

$$\text{Porosity (\%)} = \frac{\text{Total pore volume (cc·g}^{-1})}{\dfrac{1}{\text{True density (g·cc}^{-1})} + \text{Total pore volume (cc·g}^{-1})}$$

In Equation 1, a true density was 2.33 g/cc, and a total pore volume was measured by equipment, TriStar II 3020 manufactured by Micrometrics. In addition, the total pore volume was measured through an adsorption amount of a nitrogen gas according to a change in relative pressure at a liquid nitrogen temperature (77 K).

d) Measurement of number density of silicon carbide (SiC) particles

The number density of the silicon carbide particles in the shell portion of the anode active material prepared in each of Examples 1 to 3 and Comparative Examples 4 to 6 was measured.
In this measurement, a cross section of a powder was processed using a focused-ion beam (FIB) and observed and measured by a field-emission scanning electron microscope (FE-SEM).

e) Measurement of amount of oxygen

The amount of oxygen was measured through the quantitation of gas generated by the combustion of the anode active material at a high temperature (3000°C or higher) (836 Series, LECO).

f) Measurement of crystal particle (X-ray diffraction analysis (XRD))

A crystal structure was analyzed by scanning a sample powder pellet to be measured with a Cu-K$\alpha$ ray in an XRD (X'pert, Malvern Panalytical) device. At this time, a size of the observed crystal particle was calculated by the following mathematical equation.

$$\tau = \frac{K\lambda}{\beta \cos \theta}$$

$\tau$: Grain size

K : Shape factor ($\approx 0.9$)

$\lambda$: X-ray wavelength

$\beta$ : Peak full-width half maximum

$\theta$: Bragg diffraction angle

g) Measurement of electrical conductivity of powder

An electrical conductivity of a powder of the anode active material prepared in each of Examples 1 to 3 and Comparative Examples 1 to 6 was measured.

In this measurement, the powder was pelletized and the electrical conductivity of the powder was measured by a 4-probe measurement method. 500 g of the powder of the anode active material was put into a powder resistance measurement container, a generated electrical resistance was measured and converted into the electrical conductivity, and at this time, the electrical resistance was measured in real time while compressing the powder pellet.

Measurement results are shown in Table 1 below.

[Table 1]

| | Particle size of composite (D50, $\mu$m) | Carbon content (%) | Oxygen content (%) | SiC Crystal particle (nm) | Porosity (%) | SiC particle density (number of particles/$\mu$m$^2$) | Electrical conductivity (S/cm) |
|---|---|---|---|---|---|---|---|
| Example 1 | 8.11 | 53.6 | 7.8 | 7.81 | 17.3 | 63 | 16.2 |
| Example 2 | 8.21 | 52.7 | 7.4 | 7.66 | 21.4 | 55 | 16.0 |
| Example 3 | 8.07 | 53.1 | 7.9 | 7.68 | 15.8 | 87 | 16.3 |
| Comparative Example 1 | 6.37 | 51.6 | 7.7 | 7.78 | - | - | 33.1 |
| Comparative Example 2 | 6.18 | 52.3 | 8.0 | 7.34 | - | - | 32.7 |
| Comparative Example 3 | 6.91 | 51.8 | 7.6 | 7.33 | - | - | 34.0 |
| Comparative Example 4 | 7.93 | 53.3 | 8.1 | 7.69 | 18.7 | 31 | 17.9 |
| Comparative Example 5 | 8.07 | 52.9 | 8.0 | 7.36 | 23.8 | 127 | 16.7 |
| Comparative Example 6 | 7.94 | 54.0 | 7.5 | - | 21.9 | - | 15.3 |

(3) Preparation of coin cell

a) Manufacture of coin half cell

The anode active material prepared in each of Examples 1 to 3 and Comparative Examples 1 to 6, a conductive material (Super P), and a binder (SBR-CMC) were uniformly mixed at a weight ratio of 94:2:4 to prepare an anode slurry. The anode slurry was coated on a copper thin-film current collector with a thickness of 10 $\mu$m, and a coated electrode was dried at 120°C for 20 minutes and pressed to prepare an anode.

Metal lithium was used as the anode and a counter electrode, a PE separator was used as the separator, and an electrolyte obtained by dissolving 1.0M LiPF$_6$ in a solvent, in which ethylene carbonate (EC), diethyl carbonate (DEC), and dimethyl carbonate (DMC) were mixed at a volume ratio of 3:5:2, was used as the electrolyte to prepare a CR2032 type coin half cell.

b) Preparation of coin full cell

The same anode that was used for the coil half cell was used and a cathode was prepared as follows: A cathode slurry was prepared by mixing $LiNi_{0.6}Co_{0.2}Mn_{0.2}O_2$ as a cathode active material, a conductive material (Super P), and a binder (PVDF) at a weight ratio of 95:2:3, the cathode slurry was coated on an aluminum foil current collector with a thickness of 12 $\mu$m, and a coated electrode plate was dried at 120°C for 15 minutes and pressed to prepare a cathode.

The prepared cathode and anode were used, a PE separator was used as the separator, and an electrolyte obtained by dissolving 1.5M $LiPF_6$ in a mixed solvent of EC:DEC:DMC having a volume ratio of 2:1:7 and 5% of fluoroethylene carbonate (FEC) as the electrolyte to prepare a CR2032 type coin full cell.

(3) Electrochemical evaluation method (Table 2)

a) Coin half cell

The coin half cell prepared using the anode active material prepared in each of Examples 1 to 3 and Comparative Examples 1 to 6 according to the present disclosure was charged with a constant current of 0.1 C rate at 25°C until a voltage reached 0.01 V (vs. Li), and was charged at a constant voltage until the current reached 0.05 C while maintaining 0.01 V After resting the charged cell for 10 minutes, the cell was discharged with a constant current of 0.1 C until the voltage reached 1.5 V (vs. Li) during discharging (performed two times, initial formation).

Meanwhile, "C" is a discharge speed of a cell, which refers to a value obtained by dividing a total capacity of the cell by a total discharging time.

An initial charge capacity and an initial discharge capacity are the charge and discharge capacity in a first cycle, which are calculated by the following equation.

$$\underline{Initial\ efficiency\ [\%] = (first\ cycle\ discharge\ capacity/first\ cycle\ charge\ capacity) \times}$$

$$\underline{100}$$

b) Coin full cell

The coin full cell prepared using the anode active material prepared in each of Examples 1 to 3 and Comparative Examples 1 to 6 was charged with a constant current of 0.1 C rate at 25°C until a voltage reached 4.2 V, and was charged at a constant voltage until the current reached 0.05 C while maintaining 4.2 V After resting the charged cell for 10 minutes, the cell was discharged with a constant current of 0.1 C until the voltage reached 2.7 V during discharging (performed two times, initial formation).

Then, the cell was charged with a constant current of 1.0 C rate at 25°C until the voltage reached 4.2 V, and was charged at a constant voltage until the current reached 0.05 C while maintaining 4.2 V After resting the charged coin cell for 10 minutes, the cycle of performing the discharge with a constant current of 1.0 C until the voltage reached 2.7 V during discharging was repeated (first to 100th cycles).

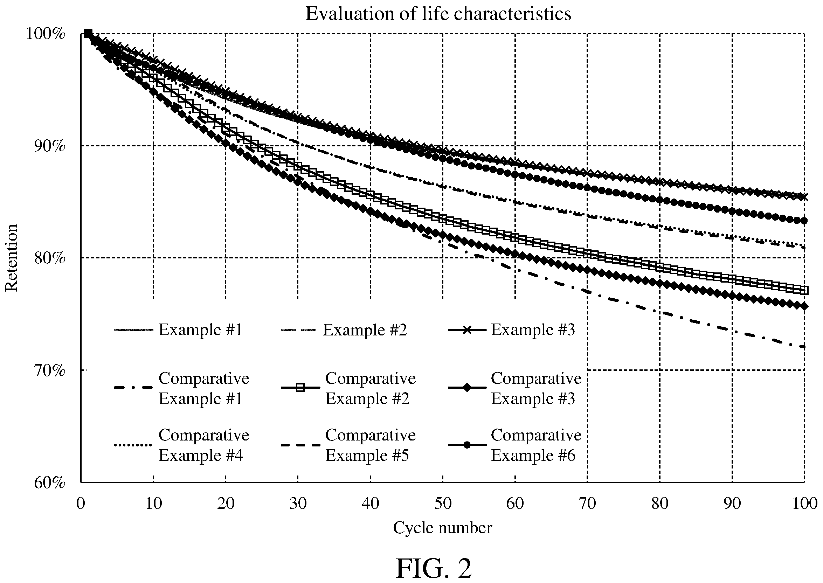

The life characteristics were calculated by the following equation, and results thereof were shown in Table 2 below and FIG. 2.

$$\underline{Life\ characteristic\ [\%] = (discharge\ capacity\ in\ 100th\ cycle/discharge\ capacity\ in\ first}$$

$$\underline{cycle) \times 100}$$

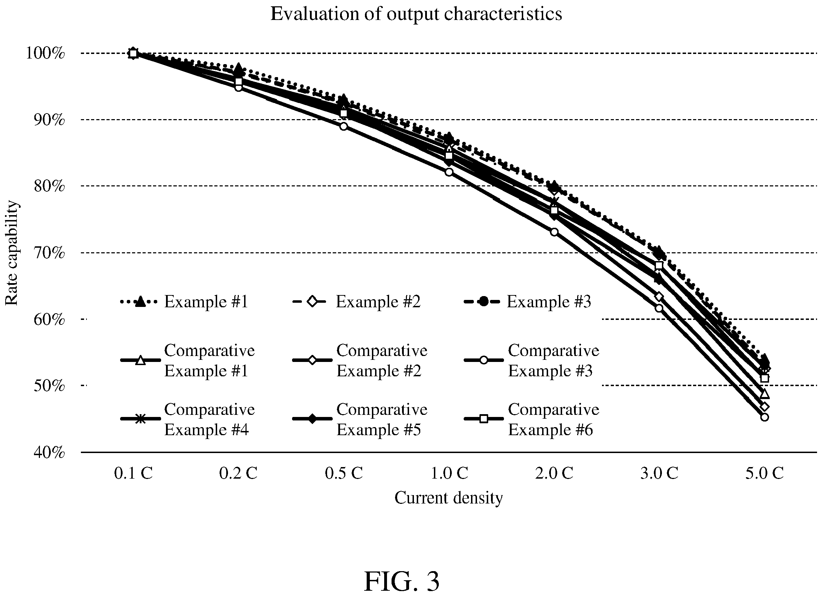

The measured output characteristics of the cell using the anode active material prepared in each of Examples 1 to 3 and Comparative Examples 1 to 6 were calculated by the following equation, and results thereof were shown in Table 2 below and FIG. 3.

$$\underline{Output\ characteristics\ [\%] = (discharge\ capacity\ with\ 5.0\ C/discharge\ capacity\ with}$$

$$\underline{0.1\ C) \times 100}$$

The measured electrical resistance (DCIR) of the cell using the anode active material prepared in each of Examples 1 to 3 and Comparative Examples 1 to 6 was calculated by the following equation and measured using a ratio of changed values of a voltage and a current in an equilibrium state (0) and a current applied state (a) in the following equation.

$$\underline{DC\text{-}iR \ [\%] = [(V_a - V_0)/(I_a - I_0)] = [\triangle V / \triangle I]}$$

The results are shown in Table 2 below.

[Table 2]

|  | Discharge capacity (mAh g$^{-1}$) | Initial efficiency (%) | Life characteristics (%) | DC-iR ($\Omega$) | Output characteristics (%) |
|---|---|---|---|---|---|
| Example 1 | 1353.1 | 85.9 | 85.6 | 16.1 | 54.1 |
| Example 2 | 1359.1 | 86.1 | 85.3 | 17.0 | 52.6 |
| Example 3 | 1347.2 | 86.0 | 85.4 | 16.3 | 53.1 |
| Comparative Example 1 | 1427.3 | 87.7 | 72.1 | 13.1 | 48.8 |
| Comparative Example 2 | 1430.0 | 88.0 | 77.1 | 14.1 | 46.9 |
| Comparative Example 3 | 1429.2 | 87.4 | 75.7 | 12.9 | 45.3 |
| Comparative Example 4 | 1360.1 | 85.7 | 81.1 | 15.8 | 52.8 |
| Comparative Example 5 | 1292.1 | 81.3 | 80.9 | 16.1 | 51.3 |
| Comparative Example 6 | 1357.4 | 85.5 | 83.3 | 16.0 | 51.1 |

From the above, it is found that, in Examples 1 to 3 including the anode active material according to an embodiment of the present disclosure, the life characteristics and the output characteristics are excellent compared to Comparative Examples 1 to 3 including a single silicon particle core, and the life characteristics are more excellent compared to Comparative Examples 4 and 5 in which the SiC particle density is not in the range of 50 to 100/$\mu$m$^2$ and Comparative Example 6 in which SiC is not formed.

On the other hand, in Comparative Examples 1 to 3, high electrical conductivity is obtained because a value of DC-iR is measured to be low, however, as described above, it is found that Comparative Examples 1 to 3 show poor results in terms of life/output due to the structure of the material that is unfavorable to durability.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

EXPLANATION OF REFERENCE NUMERALS

10: Silicon carbide (SiC) particle
20: Silicon nanoparticle
30: Carbon-based shell layer

**Claims**

1. An anode active material comprising:

   a core comprising metal particles; and
   a shell layer formed on an outer portion of the core,
   wherein the shell layer comprises metal carbide particles and a carbon-based material, and
   wherein a number density (number/$\mu$m$^2$) of the metal carbide particles in the shell layer is 50 or more to 100 or less.

2. The anode active material of claim 1, wherein the metal particles comprise one or more selected from a group consisting of Si, Al, Zn, Ca, Mg, Fe, Mn, Co, Ni, and Ge.

3. The anode active material of claim 1,

   wherein the metal particles included in the core are silicon nanoparticles, and
   wherein the metal carbide particles included in the shell layer are silicon carbide (SiC) particles.

4. The anode active material of claim 3, wherein an average particle size $D_{50}$ of the silicon nanoparticles is 80 nanometers (nm) to 130 nm.

5. The anode active material of claim 3, wherein the silicon carbide particles have a size of 50 nm to 200 nm.

6. The anode active material of claim 1, wherein the carbon-based material comprises one or more of crystalline and amorphous carbon.

7. The anode active material of claim 6, wherein the crystalline carbon comprises graphite-based carbon.

8. The anode active material of claim 6, wherein the amorphous carbon is formed of one or more selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin or a vinyl chloride resin, coal-based pitch, petroleum-based pitch, polyvinyl chloride, mesophase pitch, tar, a block copolymer, polyol, and low-molecular-weight heavy oil.

9. The anode active material of claim 1,

   wherein an average particle size $D_{50}$ of a core-shell structure is 3 $\mu$m to 10 $\mu$m, and
   wherein a thickness of the shell layer is 100 nm to 3 $\mu$m.

10. The anode active material of claim 1, wherein the core further comprises one or more of crystalline carbon and amorphous carbon.

11. A method of preparing an anode active material, the method comprising:

    step S1 of dispersing metal nanoparticles in a solvent;
    step S2 of preparing a spherical metal precursor powder by spray-drying the dispersed solution;
    step S3 of mixing and compounding the spherical metal precursor powder with an amorphous carbon precursor and crystalline carbon; and
    step S4 of performing a heat treatment at 1100°C to 1400°C for 3 to 8 hours.

12. The method of claim 11,

    wherein the metal nanoparticles are silicon nanoparticles, and
    wherein the solvent is a solvent comprising one or more selected from a group consisting of methanol, ethanol, propanol, and butanol.

13. The method of claim 11,

wherein the crystalline carbon comprises graphite-based carbon, and

wherein the amorphous carbon is formed of one or more selected from a group consisting of sucrose, a phenol resin, a naphthalene resin, a polyvinyl alcohol resin, a furfuryl alcohol resin, a furan resin, a cellulose resin, a styrene resin, a polyimide resin, an epoxy resin or a vinyl chloride resin, coal-based pitch, petroleum-based pitch, polyvinyl chloride, mesophase pitch, tar, a block copolymer, polyol, and low-molecular-weight heavy oil.

14. The method of claim 11, wherein a mixing weight ratio of the spherical metal precursor powder to the amorphous carbon precursor in step S3 is 40:20 to 40:35.

15. A lithium secondary battery comprising the anode active material of claim 1.

FIG. 1

Evaluation of life characteristics

FIG. 2

Evaluation of output characteristics

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220161487